(19) Europäisches Patentamt
European Patent Office
Office européen des brevets

(11) Veröffentlichungsnummer : **0 053 730**
**B1**

(12) # EUROPÄISCHE PATENTSCHRIFT

(45) Veröffentlichungstag der Patentschrift : **18.09.85**

(51) Int. Cl.⁴ : **G 01 B 11/24**, G 01 B 11/00

(21) Anmeldenummer : **81109450.7**

(22) Anmeldetag : **31.10.81**

(54) **Schlüssel-Erkenner.**

(30) Priorität : **27.11.80 DE 3044611**

(43) Veröffentlichungstag der Anmeldung : **16.06.82 Patentblatt 82/24**

(45) Bekanntmachung des Hinweises auf die Patenterteilung : **18.09.85 Patentblatt 85/38**

(84) Benannte Vertragsstaaten :
**AT BE CH DE FR GB IT LI LU NL SE**

(56) Entgegenhaltungen :
**FR-A- 1 499 626**
**FR-A- 2 350 579**
**FR-A- 2 379 045**
**GB-A- 1 385 912**
**US-A- 3 399 592**
**US-A- 3 918 816**
**US-A- 4 064 534**

(73) Patentinhaber : **Webb Service GmbH**
**Ohmstrasse 48**
**D-6000 Frankfurt/Main 90 (DE)**

(72) Erfinder : **Schmalfuss, Harald, Dr.**
**Rosenring 11 a**
**D-6054 Rodgau 3 (DE)**
Erfinder : **Bolz, Reinhold**
**Weingartenstrasse 6**
**D-6093 Flörsheim-Wichern (DE)**
Erfinder : **Heinze, Werner**
**Prieststrasse 15**
**D-6000 Frankfurt/Main (DE)**
Erfinder : **Sinsel, Friedel**
**Severusstrasse 49**
**D-6000 Frankfurt/Main 50 (DE)**
Erfinder : **Scheiding, Uwe, Dr.**
**Oranienstrasse 34**
**D-6272 Niedernhausen (DE)**
Erfinder : **Schneider, Bernhard**
**Weilbächer Wälder 12**
**D-6238 Hofheim (DE)**

(74) Vertreter : **Heidrich, Udo, Dr. jur., Dipl.-Phys.**
**Franziskanerstrasse 30**
**D-8000 München 80 (DE)**

**EP 0 053 730 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die Erfindung betrifft einen Schlüssel-Erkenner nach dem Oberbegriff des Anspruchs 1.

Bei der Duplizierung von Schlüsseln, insbesondere Flach-Schlüsseln wie « Sicherheits »- und Kfz-Schlüsseln, ist es bis jetzt notwendig, aus einer großen Anzahl (mehr als 20 000) Schlüssel-Rohlinge manuell den richtigen herauszusuchen, was ersichtlich sehr erfahrene, geschulte Mitarbeiter erfordert.

Es ist daher Aufgabe der Erfindung, erstmalig einen Schlüssel-Erkenner zu schaffen, der im wesentlichen, d. h. hinsichtlich der eingentlichen Erkennung, vollautomatisch arbeitet, zudem sehr betriebssicher und hochauflösend aufgrund berührungsfreier Abtastung des Schlüssels.

Die erfindungsgemäße Lösung dieser Aufgabe erfolgt durch die Lehre nach dem kennzeichnenden Teil des Anspruchs 1.

Vorteilhafte Ausgestaltungen der Erfindung sind in den Unteransprüchen angegeben, die grundsätzlich auch die damit jeweils erreichten Vorteile erkennen lassen.

Besonders zweckmäßig ist die Ausgestaltung der ersten Abbildungs-Optik nach dem Anspruch 10, wie in der Figurenbeschreibung im einzelnen erläutert ist.

Demgegenüber ist bisher lediglich folgender Stand der Technik bekannt geworden :

— (vgl. DE-A-29 16 862) ein Verfahren zum Vermessen planer zweidimensionaler Objekte bzw. zwei dimensionaler Projektionen dreidimensionaler Körper ;

— (vgl. GB-A-13 85 912) die optische Erkennung allein des Quer-Profils von Stahlknüppeln ; und

[S. 2a]

Anhand der Zeichnung wird die Erfindung beispielsweise näher erläutert. Es zeigen :

Figur 1 schematisch einen Flach-Schlüssel mit zu berücksichtigenden Meßgrößen ;

Figur 2 ein Bild von Quer- und Längs-Profil eines Flach-Schlüssels ;

Figur 3 schematisch eine mechanische Schlüssel-Zwangs-Justiervorrichtung ;

Figur 4 schematisch eine Schlüssel-Halte- und -Transport-Vorrichtung (zusammen mit der Schlüssel-Zwangs-Justiervorrichtung von Fig. 3) ;

Figur 5 eine schematische Gesamtansicht eines ersten Schlüssel-Erkenners (ausgenommen die Signal-Auswertung) ;

Figur 6 schematisch eine Bildaufnahmeeinheit mit einem Signal-Aufbereiter ;

Figur 7 Signal-Diagramme des Signal-Aufbereiters ;

Figur 8 einen Auswerter als Blockschaltbild ; und

— (vgl. FR-A-2 379 045) eine (auf eine mit der Patentinhaberin verbundene Gesellschaft zurückgehende) Vorrichtung zur Kontrolle des Querschnitts eines Flachschlüssels, bei welcher übereinanderliegende Lamellenpaare vorgesehen sind, zwischen die ein Schlüssel einschiebbar ist und die durch den Schlüssel in horizontaler Richtung verschiebbar sind ; die horizontale Verschiebung der einzelnen Lamellen bildet ein Maß für den Schlüsselquerschnitt.

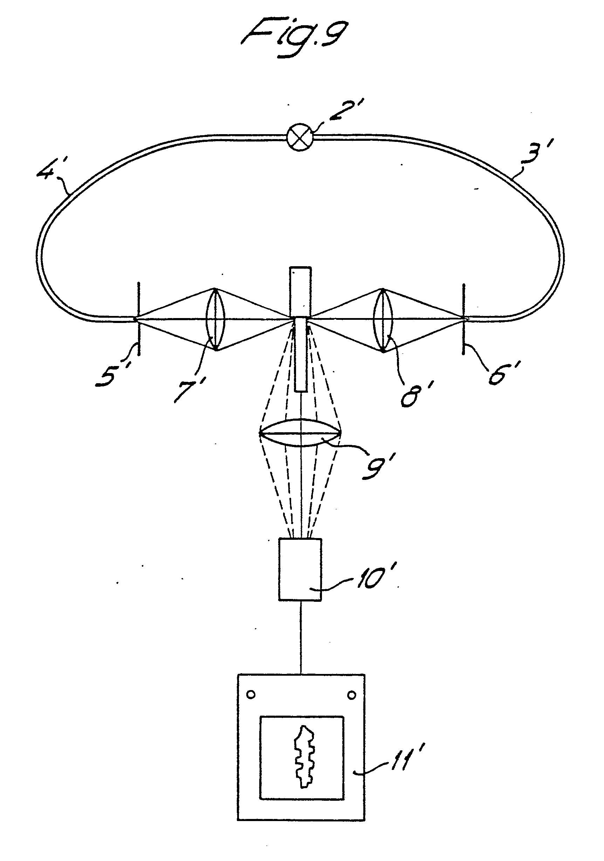

Figur 9 einen Schlüssel-Erkenner nach einem zweiten Ausführungsbeispiel, das im wesentlichen eine Vereinfachung des Ausführungsbeispiels gemäß Fig. 5 darstellt.

Zunächst seien anhand von Fig. 1 einige Begriffsbestimmungen zum Schlüssel-Schaft SA eines außerdem einen Kopf K besitzenden Schlüssels S gegeben :

— Schaftlänge l,
— Profilbreite h,
— Profilstärke d,
— Spitzenform SF,
— Fräsgegenseite FG,
— Anschlaggröße A der Fräsung,
— Profilnut N.

Nunmehr sei auf den Schlüssel-Erkenner selbst eingegangen.

Das hier beschriebene erste Ausführungsbeispiel beschäftigt sich mit einem Flach-Schlüssel, doch ist die Erfindung auch ohne weiteres auf andere Schlüssel, z. B. Kreuz- und Chubb-Schlüssel, anwendbar, sofern die folgenden beschriebenen Beispiele der Schlüssel-Zwangs-Justiervorrichtung und der Schlüssel-Halte- und -Transport-Vorrichtung entsprechend angepaßt werden.

Das hier erläuterte Ausführungsbeispiel des erfindungsgemässen Schlüssel-Erkenners besitzt im wesentlichen die folgenden Baugruppen :

— mechanische Schlüssel-Zwangs-Justiereinrichtung (Fig. 3, 4) ;

— Schlüssel-Halte- und -Transport-Vorrichtung (Fig. 4) ;

— Beleuchtungs-Optik und Abbildungs-Optiken (Fig. 5) ;

— Bildaufnahmeeinheit einschließlich Signalaufbereitung und Steuersignalgewinnung (Fig. 6, 7) ;

— Auswerter (Fig. 8).

Fig. 3 zeigt die mechanische Schlüssel-Zwangs-Justiervorrichtung.

Sie bringt den Schlüssel-Schaft SA in eine vorgegebene Stellung, und zwar durch Positionierflächen 52 und 53, an die sich der Schlüssel-Schaft SA anlegt. Diese Positionierflächen sind hier ausgebildet als ein Seiten-Anschlag 51 und ein Längs-Anschlag 52, der den Profil-Anschlag A abstützt.

Die Schlüssel-Zwangs-Justiervorrichtung besitzt ferner mehrere an den Schlüssel-Schaft SA anlegbare Führungs-Lamellen 55 und genau so viele Andrück-Federn 57, die durch ein Entriegelungsorgan 59, 61 außer Wirkung bringbar sind, um den Schlüssel herauszunehmen. Die Führungs-Lamellen 55 sind so fein verteilt, daß

zumindest eine von ihnen in eine Profil-Nut N des Schafts SA eingreift.

Die Führungs-Lamellen 55 stellen auch sicher, daß die Schlüssel-Achse kollinear zu optischen Haupt-Achse der Querprofil-Abbildung liegt (vgl. dazu weiter unten).

Fig. 4 zeigt (in verkleinertem Maßstab) noch einmal die mechanische Schlüssel-Zwangs-Justiervorrichtung, nunmehr aber zusammen mit einer Schlüssel-Halte- und -Transport-Vorrichtung 70, die den Schlüssel S haltert und den Schlüssel-Schaft SA in die Meß-Stellung transportiert, nachdem sie ihn von der Schlüssel-Zwangs-Justiervorrichtung 50 übernommen hat. Sie besitzt zwei Klemmbacken 71, die den Schlüssel-Kopf K haltern, und zwei geradegeführte Schieber 72 und 73, die (in nicht gezeigter Weise) feststellbar sind. Der Schieber 72 ist in Richtung der Profil-Stärk-Achse, der Schieber 73 in Richtung der Profil-Breiten-Achse beweglich.

Mit dem Schieber 72 ist es auch möglich, Schlüssel mit asymmetrischem Kopf (bezüglich des Seiten-Anschlags 51) zu haltern.

Fig. 5 zeigt zunächst die Beleuchtungs-Optik.

Sie besitzt eine Lichtquelle 1, Lichtleit-Faserbündel 2a, a', b, Zylinder-Linsen 3a, a' und eine Mattscheibe 4.

Das Licht der Lichtquelle 1, die z. B. eine 150-W-Halogen-Lampe sein kann, wird auf die Faserbündel 2a, a', b fokussiert.

Das Faserbündel 2b dient zur Schattenriß-Beleuchtung des Schlüssel-Schafts SA, während die Bündel 2a, a' für ein Lichtschnittverfahren benötigt werden, wozu ihre Austrittsflächen als Lichtspalte ausgebildet sind (was schematisch angedeutet ist), so daß sie als Querchnittswandler wirken. Das Licht von den Austrittsspalten der Faserbündel 2a und 2a' wird über die vorzugsweise verwendeten Zylinder-Linsen 3a und a' an den Meß-Ort O links und rechts auf die Schaft-Oberfläche als schmales Lichtband projiziert, das dem Profilverlauf folgt.

Das Faserbündel 2b beleuchtet die Mattscheibe 4, die sich vor dem Schaft SA befindet.

Fig. 5 zeigt ferner zwei Abbildungs-Optiken, die das Bild von Quer- und Längs-Profil gemäß Fig. 2 erzeugen.

Eine erste Abbildungs-Optik erfaßt das Quer-Profil als am Meß-Ort O remittiertes Licht $L_1$ der Lichtbänder durch Abbilden über eine Linse 5 in eine Bildebene 9 (Fig. 2). Die optische Achse der Linse 5 ist kollinear mit der Schlüssel-Längsachse. Ein derartiger Aufbau ist besonders einfach, da das gesamte Quer-Profil auf einmal abgebildet wird, außerdem bleibt das Quer-Profil in seinen Proportionen ohne Verzerrunger erhalten. Andererseits werden aber hohe Anforderungen an die Lichtempffindlichkeit und den dynamischen Bereich des opto-elektrischen Sensors gestellt. Schließlich dürfen die Schlüssel nicht gegenüber ihrer Längs-Achse verbogen sein.

Diese Schwierigkeiten werden weitgehend überwunden, wenn die Lichtbänder von den Faserbündeln 2a, 2a' unter einem von der optischen Haupt-Achse abweichenden Winkel betrachtet werden, nämlich mittels der Spiegel-Kombination 7, 7', 8, die die beiden Teil-Bilder wieder vereinigt. Das abgebildete Quer-Profil ist jetzt allerdings perspektivisch verzerrt.

Ein Schattenriß $L_2$ des Längs-Profils wird über Prismen 6a-d so umgelenkt bzw. sein Bild um 90° gedreht, daß es über die Linse 5' in die gemeinsame Bildebene 9 abgebildet wird (Fig. 2).

Fig. 6 zeigt genauer die Bildaufnahmeeinheit, die in Fig. 5 nur angedeutet ist.

Die Bildaufnahmeeinheit besitzt eine 256-pixel (Bildelement)-CCD-Zeile 10, eine Aufnahme-Elektronik 11, einen Schlitten 12, einen Gleichstrommotor 13, eine Rutschkupplung 14, eine Spindel 14a, eine Teilkreisscheibe 15, eine Diode 16 zum Lesen der Teilkreisscheiben-Markierungen, eine Synchronisier-Logik 17 sowie Endschalter 18 bis 21.

Die CCD-Zeile 10 wird als opto-elektrischer Sensor gewählt, da sie besonders einfach im Aufbau ist. Sie ist auf dem Schlitten 12 so montiert, daß sie die Bildebene 9 gemäß Fig. 2 abtasten kann. Der Antrieb des Schlittens 12 erfolgt über die Rutschkupplung 14 durch den Gleichstrommotor 13. Der mechanische Vorschubweg wird über die Teilkreisscheibe 15, die Diode 16 und die Synchronisier-Logik 17 gemessen. Die Endschalter 18 und 19 definieren den Bildfeld-Bereich in der Bildebene 9, d. h. in diesem Bildfeld werden Informationen erwartet. Der Endschalter 20 schaltet von Vor- auf Rücklauf, der Endschalter 21 ist der Endabschalter für den Schlitten 12. Damit ist dann die Bildaufnahme beendet.

Die analogen elektrischen Signale der CCD-Zeile 10 werden mit Hilfe eines Tiefpass-Filters 22, eines Schmitt-Triggers 23 sowie einer Stufe 24 zur Differenzierung mit Einweg-Gleichrichtung und Pulsformung so aufbereitet, daß danach je CCD-Zeile 10 nur noch zwei Zahlenwerte für das Quer-Profil und ein Zahlenwert für das Längs-Profil zu verarbeiten sind. Fig. 7 zeigt diese Signal-Aufbereitung für das Quer-Profil.

Die Aufnahme-Elektronik 11, die Verarbeitungs-Elektronik 17 und die Endschalter 18-21 erzeugen Synchron-Signale, die in den Auswerter 80 gemäß Fig. 8 eingespeist werden, die jetzt näher erläutert sei.

Die zwar binären, jedoch noch analogen aufbereiteten Signale vom Signal-Aufbereiter 30 werden in einer Stufe 81 in digitale Signale umgesetzt und zwischengespeichert. Der so gewonnene Meßgrößen-Satz beschreibt die Konturen von Quer- und Längs-Profil, die dann im nachgeschalteten Segmentierer 83 voneinander getrennt und in ihren Koordinaten normiert werden, so daß sie dann unabhängig von der augenblicklichen absoluten Lage in der Bildebene sind.

Die Stufe 85 berechnet dann aus den Kontur-Größen Schlüssel-Merkmale wie Schaftlänge, Nutzahl, Nuttiefe, Nutform, Profil-Breite, Profil-Stärke, Spitzenform, usw. (vgl. dazu auch eingangs Fig. 1) und speichert diese.

Einige wesentliche Merkmale davon werden in

einem Bereichsadressen-Speicher 79 zusammengefaßt, der bestimmt, in welchem Bereich des eigentlichen Speichers 89, 91 nach Schlüssel-Rohlings-Daten gesucht werden soll.

Der eigentliche Speicher 89, 91 ist zweigeteilt, indem Daten, die häufig benötigt werden, in einem schnellen Massenspeicher 89, z. B. einem Magnetblasenspeicher, abgespeichert sind, dagegen seltener gebrauchte Daten in einem langsamen Massenspeicher 91, z. B. einer Minikassette, um von dort bei Bedarf in den schnellen Massenspeicher 89 übertragen werden zu können.

Ein den Vergleich zwischen den Daten des zu erkennenden Schlüssels und den Schlüssel-Rohlings-Daten vornehmender Vergleicher 87 ist einem Entscheidungsgrößen-Glied 93 vorgeschaltet, auf das ein Schwellen-Glied 95 und eine Anzeige 97 folgen.

Toleranzen können durch einen Toleranz-Geber 77 vorgegeben werden.

Der Auswerter 80 besitzt grundsätzlich zwei Betriebsarten :

In der « Lern »-Betriebsart müssen die Meßgrößen von Schlüssel-Rohlingen aufgenommen, speicherplatz-sparend codiert und abgespeichert werden.

Im « Gebrauchs »-Betrieb werden dann die so gespeicherten Schlüssel-Daten mit den Meßgrößen verglichen, die jeweils von einem zu duplizierenden Schlüssel gewonnen worden sind.

Schließlich sei eingegangen auf ein zweites Ausführungsbeispiel des erfindungsgemäßen Schlüssel-Erkenners, das gegenüber dem ersten Ausführungsbeispiel stark vereinfacht ist.

Ausweislich Fig. 9 wird ein zu erkennender Flach-Schlüssel 1' in eine Haltevorrichtung (nicht gezeigt) eingelegt. Die Schaftlänge, -dicke und -breite sowie die Form der Schaftspitze werden aus dem Schattenbild des Schlüssels gewonnen. Für die Abbildung des Schlüsselprofils, d. h. Lage, Anzahl und Form der Nuten, wird ein inkohärentes Lichtschnittverfahren angewendet. Als Lichtquelle dient eine konventionelle Halogenlampe 2'. Über Lichtleitfasern 3' und 4' werden zwei Spalte 5' und 6' beleuchtet und über zwei Linsensysteme 7' und 8' links und rechts auf den zu untersuchenden Schlüssel 1' in der Höhe der Anschlagsfräsung abgebildet. Das von der Schlüsseloberfläche ausgehende remittierte Licht wird von einem Abbildungslinsensystem 9', dessen optische Achse kollinear zur Schlüssellängsachse ist, auf die Kathode einer Fernsehkamera 10' abgebildet und dann auf einem Monitor 11' dargestellt.

**Patentansprüche**

1. Schlüsselerkenner zum Erkennen der Schaft-Profilierung von Schlüsseln, insbesondere Flachschlüsseln, gekennzeichnet durch

eine Beleuchtungs-Optik zum Beleuchten des Schlüssel (S)-Schafts (SA) im wesentlichen quer zur Schlüssel (S)-Längsachse

a) mindestens zweiseitig an mindestens einem charakteristischen Meß-Ort (O) vorgegebener Längs-Koordinate des Schlüssels (S) und

b) mindestens einseitig über seine gesamte Länge (l) und Breite (h),

eine erste Abbildungs-Optik zum Abbilden des Quer-Profils über am Meß-Ort (O) vom Schaft (SA) im wesentlichen längs des Schlüssels (S) remittiertes Licht ($L_1$),

eine zweite Abbildungs-Optik zum Abbilden des Längs-Profils über durch den gesamten Schaft (SA) beeinflußtes Licht ($L_2$),

eine Bildaufnahme-Einheit, beaufschlagt von beiden Abbildungs-Optiken, und

einen Auswerter (80), der die sich auf das Längs- und das Querprofil des Schafts (SA) beziehenden Meßwerte mit gespeicherten Meßwerten von Schlüssel-Rohlingen vergleicht.

2. Schlüssel-Erkenner nach Anspruch 1, dadurch gekennzeichnet,

daß am Meß-Ort (O) der Schaft (SA) seine maximale Breite (h) besitzt.

3. Schlüssel-Erkenner nach Anspruch 2, dadurch gekennzeichnet,

daß am Meß-Ort (O) sich der Schaft-Anschlag (A) befindet.

4. Schlüssel-Erkenner nach einem der vorhergehenden Ansprüche, dadurch gekennzeichnet,

Daß die Beleuchtungs-Optik besitzt :

eine gemeinsame Lichtquelle (1) und

eine Lichtleitfaser-Optik (2) mit mindestens drei Faserbündeln (2a, 2a', 2b), von denen zwei (2a, 2a') eine spaltförmige Lichtaustrittsfläche zur Beleuchtung des Meß-Orts (O) aufweisen.

5. Schlüssel-Erkenner nach Anspruch 4, dadurch gekennzeichnet,

daß die beiden Faserbündel (2a, 2a') den Schaft (SA) am Meß-Ort (O) jeweils über eine Zylinder-Linse (3a, 3a') beleuchten.

6. Schlüssel-Erkenner nach einem der vorhergehenden Ansprüche, dadurch gekennzeichnet,

daß die zweite Abbildungs-Optik einem Schattenriß des Schafts (SA) erzeugt.

7. Schlüssel-Erkenner nach Anspruch 6, dadurch gekennzeichnet,

daß die Beleuchtungs-Optik vor dem Schaft (SA) eine diesen vollständig bedeckende Mattscheibe (4) besitzt.

8. Schlüssel-Erkenner nach einem der vorhergehenden Ansprüche, dadurch gekennzeichnet,

daß die beiden Abbildungs-Optiken das Quer- und das Längs-Profil des Schafts (SA) in eine gemeinsame Bildebene (9) abbilden.

9. Schlüssel-Erkenner nach einem der vorhergehenden Ansprüche, dadurch gekennzeichnet,

daß die erste Abbildungs-Optik eine Linse (5) kollinear zur Schaft (SA)-Längsachse besitzt.

10. Schlüssel-Erkenner nach Anspruch 9, dadurch gekennzeichnet,

daß die erste Abbildungs-Optik eine Spiegel-Kombination besitzt :

zwei symmetrisch zur Schaft (SA)-Längsache geneigte Spiegel (7, 7') in größerem Abstand von der Längsachse und

ein diesen zugeordnetes verspielgeltes Prisma (8) zur Umlenkung des Strahlengangs von den beiden Spiegeln (7, 7') in Richtung der Längsachse.

11. Schlüssel-Erkenner nach einem der vorhergehenden Ansprüche, dadurch gekennzeichnet,

daß die zweite Abbildungs-Optik mehrere Umlenk-Prismen (6a-d) besitzt.

12. Schlüssel-Erkenner nach einem der vorhergehenden Ansprüche, gekennzeichnet durch

eine Schlüssel-Zwangs-Justiervorrichtung (50), die den Schlüssel-Schaft (SA) in eine vorgegebene Stellung bringt.

13. Schlüssel-Erkenner nach Anspruch 12, dadurch gekennzeichnet,

daß die Schlüssel-Zwangs-Justiervorrichtung (50) mindestens eine Positionierfläche (51, 52) besitzt, an der der Schlüssel-Schaft (SA) anlegbar ist.

14. Schlüssel-Erkenner nach Anspruch 13, dadurch gekennzeichnet,

daß die Positionierflächen vorgesehen sind an
einem Seiten-Anschlag (51) und
einem Längs-Anschlag (52).

15. Schlüssel-Erkenner nach Anspruch 14, dadurch gekennzeichnet,

daß der Längs-Anschlag (52) den Profil-Anschlag (A) abstützt.

16. Schlüssel-Erkenner nach einem der Ansprüche 12-15, dadurch gekennzeichnet,

daß die Schlüssel-Zwangs-Justiervorrichtung (50) mehrere an den Schlüssel-Schaft (SA) anlegbare Führungs-Lamellen (55) und genau so viele Andrück-Federn (57) besitzt, die durch ein Entriegelungsorgan (59, 61) außer Wirkung bringbar sind.

17. Schlüssel-Erkenner nach Anspruch 16, dadurch gekennzeichnet,

daß mindestens eine der Führungs-Lamellen (55) in eine Profil-Nut (N) des Schafts (SA) eingreift.

18. Schlüssel-Erkenner nach einem der vorhergehenden Ansprüche, gekennzeichnet durch

eine Schlüssel-Halte- und -Transport-Vorrichtung (70), die den Schlüssel (S) haltert und den Schlüssel-Schaft (SA) in die Meß-Stellung transportiert.

19. Schlüssel-Erkenner nach Anspruch 18 mit einem der Ansprüche 12-17, dadurch gekennzeichnet,

daß die Schlüssel-Halte- und -Transport-Vorrichtung (70) den Schlüssel (S) von der Schlüssel-Zwangs-Justiervorrichtung (50) übernimmt.

20. Schlüssel-Erkenner nach Anspruch 18 oder 19, dadurch gekennzeichnet,

daß die Schlüssel-Halte- und -Transport-Vorrichtung (70) zwei Klemmbacken (71) besitzt.

21. Schlüssel-Erkenner nach Anspruch 20, dadurch gekennzeichnet,

daß die Klemmbacken (71) den Schlüssel-Kopf (K) einspannen.

22. Schlüssel-Erkenner nach einem der Ansprüche 18-21, dadurch gekennzeichnet,

daß die Schlüssel-Halte- und -Transport-Vorrichtung (70) mindestens einen geradegeführten Schieber (72, 73) zum Transport des Schlüssel-Schafts (SA) in die Meß-Stellung besitzt.

23. Schlüssel-Erkenner nach einem der vorhergehenden Ansprüche, dadurch gekennzeichnet,

daß die Bildaufnahme-Einheit einen beweglichen linearen opto-elektrischen Sensor (10) aufweist.

24. Schlüssel-Erkenner nach Anspruch 23, dadurch gekennzeichnet,

daß der lineare Sensor eine CCD-Zeile (10) ist.

25. Schlüssel-Erkenner nach Anspruch 23 oder 24, dadurch gekennzeichnet,

daß der lineare Sensor (10) durch einen Schlitten (12) verfahrbar ist.

26. Schlüssel-Erkenner nach Anspruch 25, dadurch gekennzeichnet,

daß der Schlitten (12) verfahrbar ist entlang mehrerer Endschalter (18-21) zum Steuern des Schlitten-Antriebs (13).

27. Schlüssel-Erkenner nach Anspruch 25 oder 26, dadurch gekennzeichnet,

daß der Schlitten (12) von einer Spindel (14a) angetrieben ist, die eine Teilkreisscheibe (15) trägt, die von einer Diode (16) abgetastet wird hinsichtlich der Teilungs-Markierungen zur Abgabe von Impulsen an eine Syunchronisier-Logik (17).

28. Schlüssel-Erkenner nach einem der Ansprüche 23-27, gekennzeichnet durch

einen Signal-Aufbereiter (30), der das vom Sensor (10) abgegebene kontinuierliche analoge Signal (Fig. 7a) in Impulse (Fig. 7d) umsetzt.

29. Schlüssel-Erkenner nach Anspruch 28, dadurch gekennzeichnet,

daß der Signal-Aufbereiter (30) besitzt :
einen Schmitt-Trigger (23) (Fig. 7b),
eine Einheit (24) zur Differenzierung, Einweg-Gleichrichtung und Pulsformung (Fig. 7c, d).

30. Schlüssel-Erkenner nach einem der vorhergehenden Ansprüche, dadurch gekennzeichnet,

daß der Auswerter (80) besitzt :

einen Segmentierer (83) zum Trennen der Meßwerte von Längs- und Quer-Profil und zum Normieren der Konturen-Meßwerte der beiden Profile,

eine Speicher-Einheit (89, 91) zum Speichern der Meßwerte,

einen Vergleicher (87), der vom Segmentierer (83) und vom Speicher (89, 91) beaufschlagt ist, und

eine Anzeige (97), die dem Vergleicher (87) nachgeschaltet ist.

31. Schlüssel-Erkenner nach Anspruch 1 oder 30, dadurch gekennzeichnet,

daß der Auswerter (80) folgende Schaft (SA)-Meßwerte berücksichtigt :
Querprofil in Höhe Anschlag (A),
Schaftlänge (l),
Profilbreite (h),

Profilstärke (d),
Spitzenform (SF),
Längsprofil der Fräsgegenseite (FG).

**Claims**

1. Key recognition device for recognizing key shaft profiles, particularly of flat keys, characterized by

an illuminating optical system for illuminating said key (S) shaft (SA) essentially tranversely to the longitudinal axis of said key (S)

a) at least on two sides at at least one characteristic measuring location (O) of a predetermined longitudinal coordinate of said key (S) and

b) at least on one side across its entire length (1) and width (h),

a first imaging optical system for producing an image of the transverse profile through light ($L_1$) diffusely reflected generally longitudinally along said key (S) from said shaft (SA) at said measuring location (O),

a second imaging optical system for producing an image of the longitudinal profile through light ($L_2$) influenced by the entire said shaft (SA),

a picture recording unit connected with the output of both said imaging optical systems and

an analyzer (80) comparing the measured values of said longitudinal and transverse profiles of said key shaft (SA) with stored measured values of key blanks.

2. Key recognition device of claim 1, characterized in that

at said measuring location (O) said shaft (SA) has its maximum width (h).

3. Key recognition device of claim 2, characterized in that

at said measuring location (O) the shaft stop (A) is located.

4. Key recognition device of any of the preceding claims, characterized in that said illuminating optical system comprises :

a common light source (1) and

a light conducting fiber bundle optical system (2) having at least three fiber bundles (2a, 2a', 2b), of which two (2a, 2a') are provided with a slit-shaped light emitting surface for illuminating said measuring location (O).

5. Key recognition device of claim 4, characterized in that said two fiber bundles (2a, 2a')

each illuminate said shaft (SA) at said measuring location (O) through a cylinder lens (3a, 3a').

6. Key recognition device of any of the preceding claims, characterized in that

said second imaging optical system produces a silhouette of said shaft (SA).

7. Key recognition device of claim 6, characterized in that

said illuminating optical system comprises in front of said shaft (SA) a frosted glass plate (4) entirely covering said shaft (SA).

8. Key recognition device of any of the preceding claims, characterized in that

both said imaging optical systems reproduce said transverse and longitudinal profiles of said shaft (SA) into a common image plane (9).

9. Key recognition device of any of the preceding claims, characterized in that

said first imaging optical system comprises a lens (5) colinearly with said longitudinal axis of said shaft (SA).

10. Key recognition device of claim 9, characterized in that

said first imaging optical system comprises a mirror combination :

two mirrors (7, 7') symmetrically inclined to said longitudinal axis of said shaft (SA) at a major distance from said longitudinal axis and

a reflecting prism (8), allocated to said two mirrors (7, 7'), for deflecting the path of rays therefrom in the direction of said longitudinal axis.

11. Key recognition device of any of the preceding claims, characterized in that

said second imaging optical system comprises a plurality of deflecting prisms (6a-d).

12. Key recognition device of any of the preceding claims, characterized by

forced key positioning means (50), positioning said key shaft (SA) into a predetermined position.

13. Key recognition device of claim 12, characterized in that

said forced key positioning means (50) comprises at least one positioning surface (51, 52), with which said key shaft (SA) can be engaged.

14. Key recognition device of claim 13, characterized in that

said positioning surfaces are provided for at

a lateral stop (51) and

a longitudinal stop (52).

15. Key recognition device of claim 14, characterized in that

said longitudinal stop (52) supports said profile stop (A).

16. Key recognition device of any of the claims 12 to 15, characterized in that

said forced key positioning means (50) comprises several guiding lamella (55) which can be engaged with said key shaft (SA) and an equal number of pressing springs (57) which are rendered ineffective through an unlocking device (59, 61).

17. Key recognition device of claim 16, characterized in that

at least one of said guiding lamella (55) engages with one profile groove (N) of said shaft (SA).

18. Key recognition device of any of the preceding claims, characterized by

a key holding and transporting means (70), holding said key (S) and transporting said key shaft (SA) into said measuring location (O).

19. Key recognition device of claim 18 in combination with any of the claims 12 to 17, characterized in that

said key holding and transporting means (70) receives said key (S) from said forced key positioning means (50).

20. Key recognition device of claim 18 or 19, characterized in that
said key holding and transporting means (70) comprises two clamping jaws (71).
21. Key recognition device of claim 20, characterized in that
said clamping jaws (71) clamp the key head (K).
22. Key recognition device of any of the claims 18 to 21, characterized in that
said key holding and transporting means (70) comprises at least one linearly guided slide (72, 73) for transporting said key shaft (SA) into said measurement position.
23. Key recognition device of any of the preceding claims, characterized in that
said picture recording unit comprises a movable linear opto-electrical sensor (10).
24. Key recognition device of claim 23, characterized in that
said linear sensor is a CCD line (10).
25. Key recognition device of claim 23 or 24, characterized in that
said linear sensor (10) is movable by a carriage (12).
26. Key recognition device of claim 25, characterized in that
said carriage (12) is movable along a plurality of limit switches (18-21) for controlling the carriage drive (13).
27. Key recognition device of claim 25 or 26, characterized in that
said carriage (12) is driven by a spindle (14a), carrying a divided-circle disk (15), being scanned by a diode (16) with respect to the division marks for outputting pulses to a synchronizing logic system (17).
28. Key recognition device of any of the claims 23 to 27, characterized by
a signal processor (30), converting the continuous analog signal (fig. 7a) from said sensor (10) into pulses (fig. 7d).
29. Key recognition device of claim 28, characterized in that
said signal processor (30) comprises: a Schmitt trigger (23) (fig. 7b)
a unit (24) for differentiating, half-wave rectification and pulse shaping (fig. 7c, d).
30. Key recognition device of any of the preceding claims, characterized in that
said analyzer (80) comprises:
a segmenting device (83) for separating said measured values of said longitudinal and transverse profiles and for normalizing the measured values of the contours of said two profiles,
a storage unit (89, 91) for storing said measured values,
a comparator (87) connected with the output of both said segmenting device (83) and said storage unit (89, 91) and
a display (97) connected with the output of said comparator (87).
31. Key recognition device of claim 1 or 30, characterized in that
said analyzer (80) processes the following ones of said measured values of said shaft (SA):
transverse profile at the height of said stop (A),
shaft length (1),
profile width (h),
profile thickness (d),
point shape (SF),
longitudinal profile of the milled counter face (FG).

**Revendications**

1. Dispositif de reconnaissance d'une clef pour l'identification du profil du panneton de clefs, en particulier de clefs plates, caractérisé par
une optique d'éclairage pour éclaircir le panneton (SA) de la clef (S), sensiblement perpendiculairement à l'axe longitudinal de cette clef (S)
a) au moins sur deux côtés, en au moins un lieu de mesure (O) caractéristique de la clef (S) et présentant des coordonnées longitudinales prédéterminées et
b) au moins d'un côté, sur toute sa longueur (1) et sa largeur (h),
une première optique de visualisation pour visualiser le profil transversal par l'intermédiaire d'une lumière ($L_1$) réfléchie par le panneton (SA) sur le lieu de mesure (O), sensiblement le long de la clef (S),
une seconde optique de visualisation pour visualiser le profil longitudinal par l'intermédiaire d'une lumière ($L_2$) influencée par l'ensemble du panneton (SA),
une unité de prises de vue soumise à l'action des deux optiques de visualisation et
un dispositif d'interprétation (80) qui compare les valeurs mesurées, relatives aux profils longitudinal et transversal du panneton (SA), à des valeurs mesurées mémorisées d'ébauches de clefs.
2. Dispositif de reconnaissance d'une clef selon la revendication 1, caractérisé par le fait que
le panneton (SA) possède sa largeur maximale (h) sur le lieu de mesure (O).
3. Dispositif de reconnaissance d'une clef selon la revendication 2, caractérisé par le fait que
la butée (A) du panneton se trouve sur le lieu de mesure (O).
4. Dispositif de reconnaissance d'une clef selon l'une des revendications précédentes, caractérisé par le fait que l'optique d'éclairage possède:
une source commune de lumière (1) et
une optique (2) à fibres conduisant la lumière, comprenant au moins trois faisceaux de fibres (2a, 2a', 2b), dont deux (2a, 2a') présentent une surface en forme de fente de sortie de la lumière en vue de l'éclairage du lieu de mesure (O).
5. Dispositif de reconnaissance d'une clef selon la revendication 4, caractérisé par le fait que
les deux faisceaux de fibres (2a, 2a') éclairent le panneton (SA) sur le lieu de mesure (O) par

l'intermédiaire d'une lentille respective de déformation (3a, 3a').

6. Dispositif de reconnaissance d'une clef selon l'une des revendications précédentes, caractérisé par le fait que

la seconde optique de visualisation engendre une silhouette ombrée du panneton (SA).

7. Dispositif de reconnaissance d'une clef selon la revendication 6, caractérisé par le fait que

l'optique d'éclairage possède, devant le panneton (SA), un disque dépoli (4) qui recouvre intégralement ce dernier.

8. Dispositif de reconnaissance d'une clef selon l'une des revendications précédentes, caractérisé par le fait que

les deux optiques de visualisation visualisent les profils transversal et longitudinal du panneton (SA) dans un plan d'image commun (9).

9. Dispositif de reconnaissance d'une clef selon l'une des revendications précédentes, caractérisé par le fait que

la première optique de visualisation possède une lentille (5) colinéairement à l'axe longitudinal du panneton (SA).

10. Dispositif de reconnaissance d'une clef selon la revendication 9, caractérisé par le fait que

la première optique de visualisation possède une combinaison de miroirs :

deux miroirs (7, 7') inclinés symétriquement par rapport à l'axe longitudinal du panneton (SA), à une plus grande distance de cet axe longitudinal et

un prisme (8) à couches réfléchissantes, associé auxdits miroirs en vue de dévier la trajectoire des rayons des deux miroirs (7, 7') en direction de l'axe longitudinal.

11. Dispositif de reconnaissance d'une clef selon l'une des revendications précédentes, caractérisé par le fait que

la seconde optique de visualisation possède plusieurs prismes de déviation (6a-d).

12. Dispositif de reconnaissance d'une clef selon l'une des revendications précédentes, caractérisé par

un dispositif (50) d'ajustement forcé de la clef qui amène le panneton (SA) de cette clef à une position prédéterminée.

13. Dispositif de reconnaissance d'une clef selon la revendication 12, caractérisé par le fait que

le dispositif (50) d'ajustement forcé de la clef possède au moins une surface de positionnement (51, 52) contre laquelle le panneton (SA) de la clef peut être appliqué.

14. Dispositif de reconnaissance d'une clef selon la revendication 13, caractérisé par le fait que

les surfaces de positionnement sont prévues

sur une butée latérale (51) et

une butée longitudinale (52).

15. Dispositif de reconnaissance d'une clef selon la revendication 14, caractérisé par le fait que

la butée longitudinale (52) soutient la butée (A) du profil.

16. Dispositif de reconnaissance d'une clef selon l'une des revendications 12-15, caractérisé par le fait que

le dispositif (50) d'ajustement forcé de la clef possède plusieurs lamelles de guidage (55) pouvant être appliquées contre le panneton (SA) de la clef et un nombre exactement identique de ressorts de pression (57) dont l'action peut être surmontée par l'intermédiaire d'un organe de déverrouillage (59, 61).

17. Dispositif de reconnaissance d'une clef selon la revendication 16, caractérisé par le fait que

au moins l'une des lamelles de guidage (55) s'engage dans une gorge (N) du profil du panneton (SA).

18. Dispositif de reconnaissance d'une clef selon l'une des revendications précédentes, caractérisé par

un dispositif (70) de retenue et de transport de la clef qui retient la clef (S) et achemine le panneton (SA) de cette clef à la position de mesure.

19. Dispositif de reconnaissance d'une clef selon la revendication 18 conjuguée à l'une des revendications 12-17, caractérisé par le fait que

le dispositif (70) de retenue et de transport de la clef prélève la clef (S) du dispositif (50) d'ajustement forcé de cette clef.

20. Dispositif de reconnaissance d'une clef selon la revendication 18 ou 19, caractérisé par le fait que

le dispositif (70) de retenue et de transport de la clef possède deux mâchoires de serrage (71).

21. Dispositif de reconnaissance d'une clef selon la revendication 20, caractérisé par le fait que

les mâchoires de serrage (71) enserrent la tête (K) de la clef.

22. Dispositif de reconnaissance d'une clef selon l'une des revendications 18-21, caractérisé par le fait que

le dispositif (70) de retenue et de transport de la clef possède au moins un coulisseau (72, 73) à guidage rectiligne en vue d'acheminer le panneton (SA) de la clef à la position de mesure.

23. Dispositif de reconnaissance d'une clef selon l'une des revendications précédentes, caractérisé par le fait que

l'unité de prises de vue présente un détecteur opto-électrique linéaire mobile (10).

24. Dispositif de reconnaissance d'une clef selon la revendication 23, caractérisé par le fait que

le détecteur linéaire est une ligne CCD (10).

25. Dispositif de reconnaissance d'une clef selon la revendication 23 ou 24, caractérisé par le fait que

le détecteur linéaire (10) peut être déplacé par l'intermédiaire d'un chariot (12).

26. Dispositif de reconnaissance d'une clef selon la revendication 25, caractérisé par le fait que

le chariot (12) peut être déplacé le long de plusieurs interrupteurs (18-21) de fin de course en vue de la commande de l'entraînement (13) de ce chariot.

27. Dispositif de reconnaissance d'une clef selon la revendication 25 ou 26, caractérisé par le fait que

le chariot (12) est entraîné par une broche (14a) qui porte un disque (15) partiellement circulaire exploré par une diode (16) pour détecter les repères de subdivision en vue de délivrer des impulsions à un circuit logique de synchronisation (17).

28. Dispositif de reconnaissance d'une clef selon l'une des revendications 23-27, caractérisé par

une unité (30) de traitement de signal qui convertit en des impulsions (figure 7d) le signal analogique (figure 7a) délivré en permanence par le détecteur (10).

29. Dispositif de reconnaissance d'une clef selon la revendication 28, caractérisé par le fait que l'unité (30) de traitement de signal possède :

une bascule de Schmitt (23) (figure 7b)

une unité (24) de différenciation, de redressement unidirectionnel et de mise en forme des impulsions (figures 7c, d).

30. Dispositif de reconnaissance d'une clef selon l'une des revendications précédentes, caractérisé par le fait que

le dispositif d'interprétation (80) possède :

une unité de segmentation (83) pour séparer les valeurs mesurées des profils longitudinal et transversal et pour normer les valeurs mesurées des contours de deux profils,

une unité de mémorisation (89, 91) pour mémoriser les valeurs mesurées,

un comparateur (87) pouvant être soumis à l'action de l'unité de segmentation (83) et de la mémoire (89, 91) et

un dispositif d'affichage (97) installé en aval du comparateur (87).

31. Dispositif de reconnaissance d'une clef selon la revendication 1 ou 30, caractérisé par le fait que le dispositif d'interprétation (80) prend en considération les valeurs mesurées du panneton (SA) mentionnées ci-après :

profil transversal à la hauteur de la butée (A),

longueur du panneton (1),

largeur du profil (h),

épaisseur du profil (d),

forme de la pointe (SF),

profil longitudinal du côté (FG) opposé au fraisage.

Fig.1

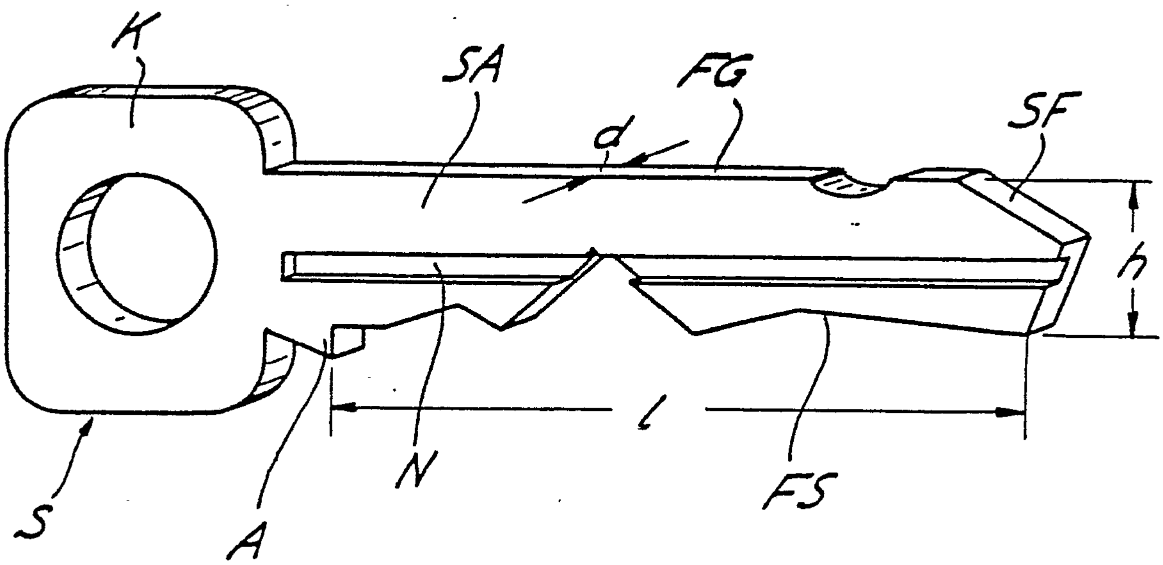


Fig.2

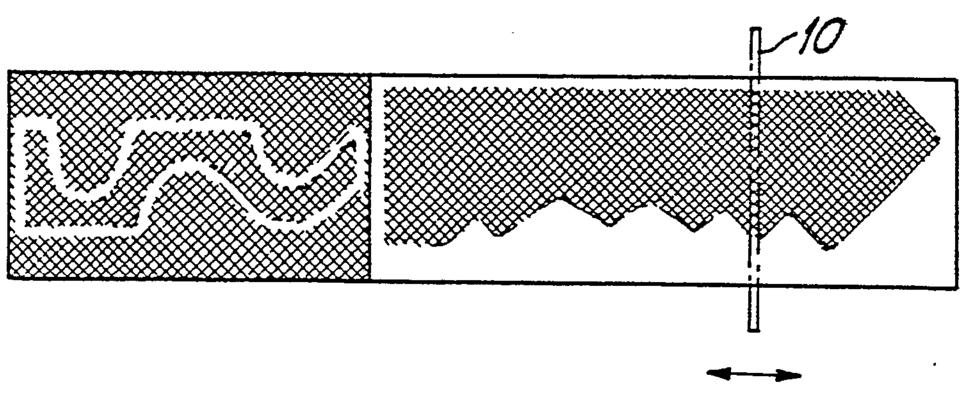

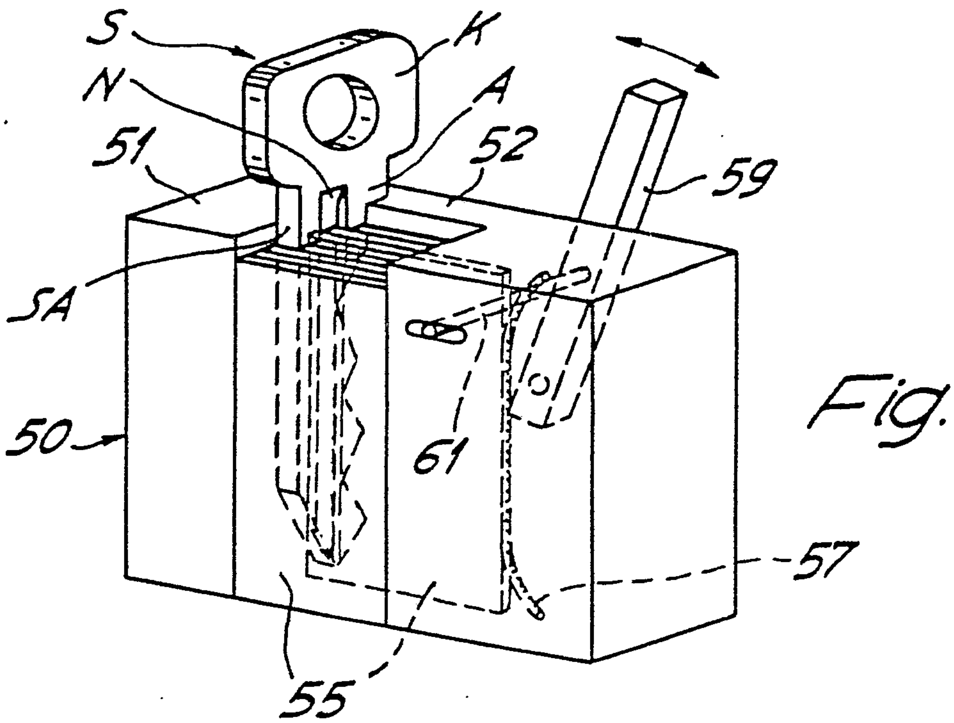


Fig. 3

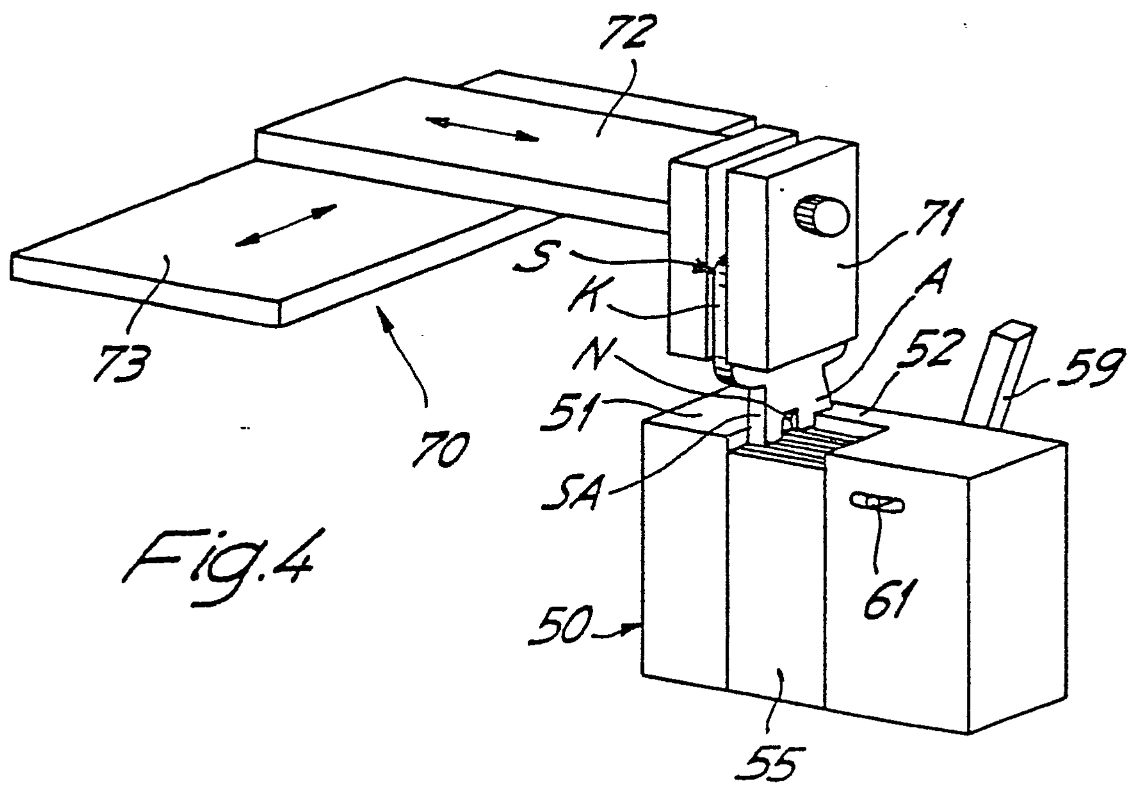


Fig. 4

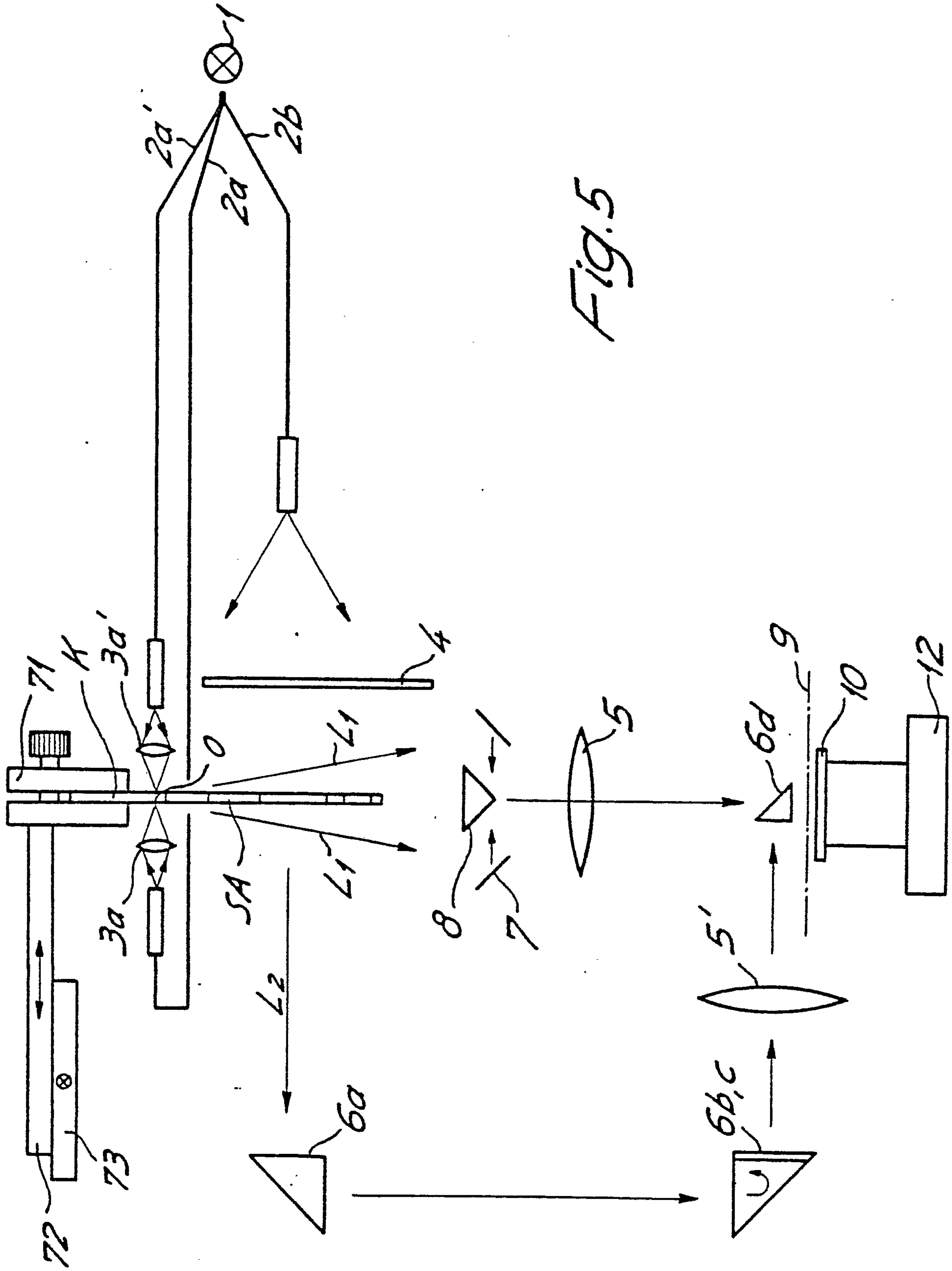


Fig.5

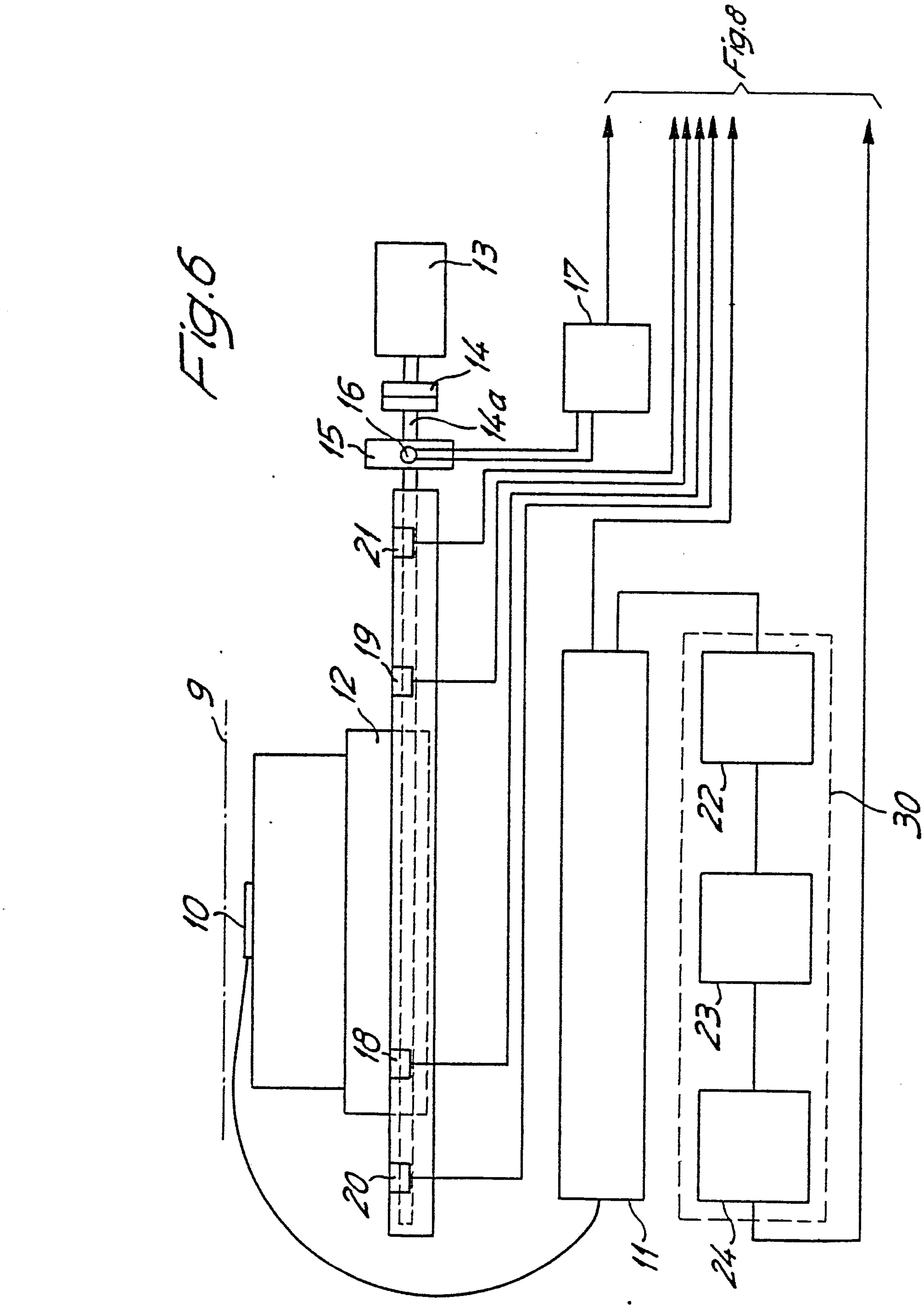
Fig.6
Fig.8
9
10
11
12
13
14
14a
15
16
17
18
19
20
21
22
23
24
30

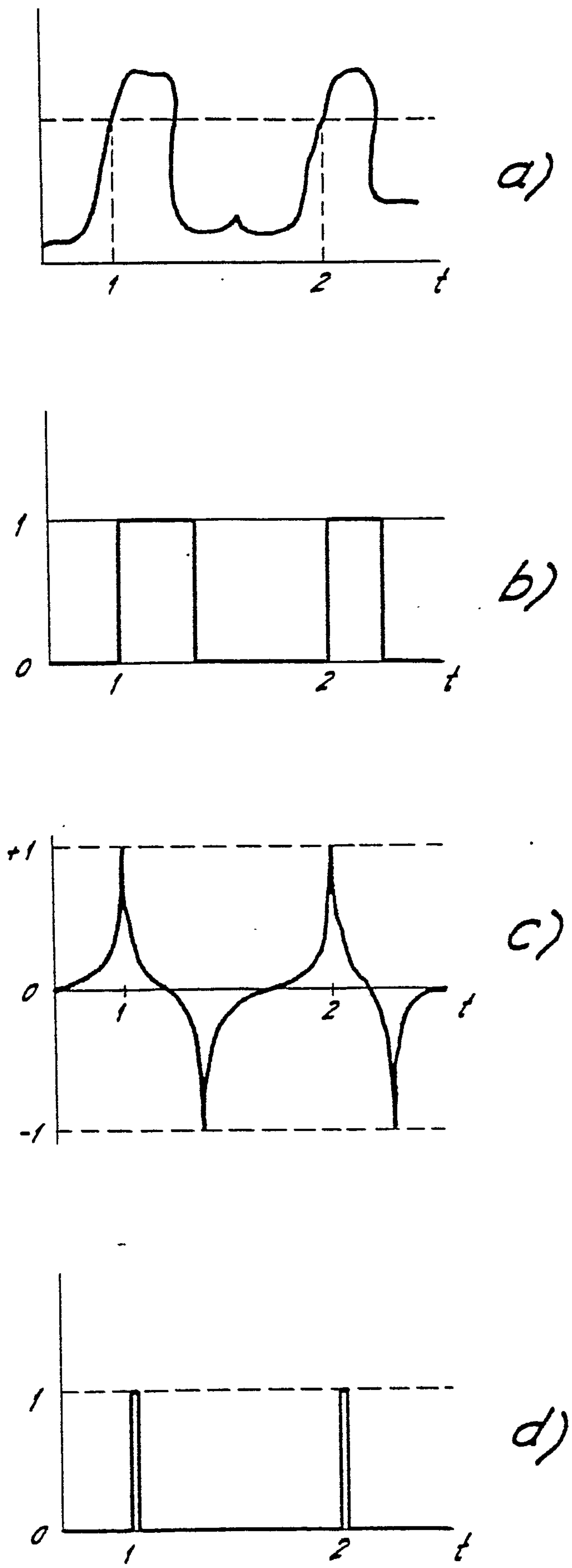


Fig.7

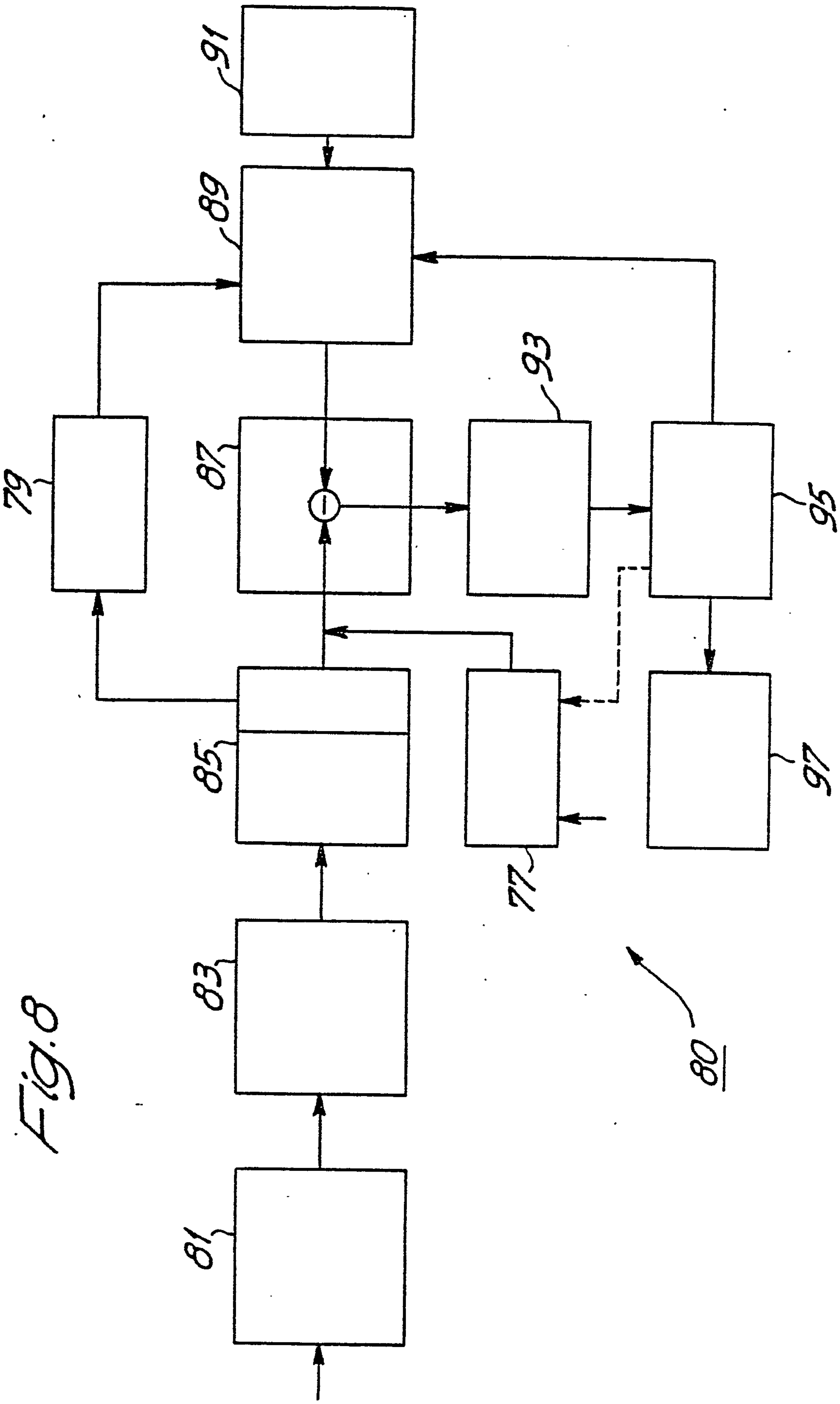


Fig.8

Fig.9